(19) **Europäisches Patentamt / European Patent Office / Office européen des brevets**

(11) **EP 4 726 436 A1**

(12) # EUROPEAN PATENT APPLICATION

(43) Date of publication:
15.04.2026 Bulletin 2026/16

(21) Application number: 25184385.0

(22) Date of filing: 23.06.2025

(51) International Patent Classification (IPC):
*G01S 13/90* (2006.01)          *G01S 7/41* (2006.01)
*G01S 13/86* (2006.01)          *G01W 1/00* (2006.01)
*G06Q 50/02* (2024.01)

(52) Cooperative Patent Classification (CPC):
G01S 13/86; G01S 7/415; G01S 13/9023;
G01W 1/00; G06Q 50/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 09.10.2024 IN 202421076623

(71) Applicant: **Tata Consultancy Services Limited**
**400 021 Mumbai, Maharashtra (IN)**

(72) Inventors:
• **PANDIT, Ankur**
  **452001 Indore, Madhya Pradesh (IN)**
• **MOHITE, Jayantrao**
  **400606 Thane, Maharashtra (IN)**
• **SAWANT, Suryakant Ashok**
  **411028 Pune, Maharashtra (IN)**
• **PAPPULA, Srinivasu**
  **500034 Hyderabad, Telangana (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR FORECASTING FLOODS AT FARM-LEVEL USING REMOTE SENSING AND AUXILIARY DATASET**

(57) The embodiments of the present disclosure herein address unresolved problems of precise prediction of flood at farm-level. Existing models leverage various types of data to identify patterns and trends associated with flooding. The proposed invention is a system and method for forecasting floods at farm-level using remote and proximal sensing and auxiliary data integration. It is based on spatially distributed land subsidence information, and spatially distributed surface topography.

Both spatially distributed land subsidence information and spatially distributed surface topography are derived from an archived Earth observation data combined with other parameters. The proposed system and method also generate a big geospatial database (BGD) of forecasted spatially distributed flood Inundation map and spatially distributed flood probability map of a given region.

FIG. 2A

EP 4 726 436 A1

200

FIG. 2B

**Description**

CROSS-REFERENCE TO RELATED APPLICATIONS AND PRIORITY

The present application claims priority to Indian application no. 202421076623, filed on October 9, 2024.

TECHNICAL FIELD

The disclosure herein generally relates to the field of flood forecasting systems, and more particularly, a method and system for forecasting floods at farm-level using remote sensing and an auxiliary data integration.

BACKGROUND

Floods prediction holds greater importance than post-flood analysis because it allows for proactive measures to minimize damage in the agriculture region. Anticipating floods enables farmers to safeguard crops, livestock, and equipment, reducing potential losses. Early warnings can help in adjusting planting schedules and implementing soil protection strategies, ensuring better resilience against flood impacts. Additionally, forecasting facilitates timely evacuation and relocation efforts, protecting both human and animal lives. While post-flood analysis provides valuable insights for future planning, the ability to anticipate and prepare for floods directly mitigates immediate threats and ensures the continuity of agricultural activities. Thus, flood forecasting is crucial for sustaining agricultural productivity and minimizing economic disruptions.

Existing remote sensing-based flood estimation techniques include Hydrological Modelling, 3D Modelling, Machine Learning, Numerical Modelling, Image Processing, and the like. Hydrological Modelling simulates the water cycle to predict how water will move through a watershed, particularly during extreme weather events. It involves the use of mathematical models to represent the various components of the hydrological cycle, including precipitation, infiltration, runoff, and river flow. 3D modeling for flood forecasting involves creating three-dimensional representations of landscapes to simulate and predict flood behavior and impacts. Numerical modeling for flood forecasting involves using mathematical models to simulate the behavior of water flow and predict flood events. These models use a set of equations that describe the physical processes governing water movement, such as rainfall-runoff relationships, river flow dynamics, and the interaction between surface water and groundwater. Image processing modeling for flood forecasting involves using advanced techniques to analyze and interpret satellite and aerial imagery to predict flood events. These approaches process large amounts of visual data to identify patterns and changes in the landscape that may indicate potential flooding. Machine learning modeling for flood forecasting involves using algorithms to analyze and interpret large datasets to predict future flood events. These models leverage various types of data, such as historical weather patterns, rainfall intensity, river flow rates, soil moisture levels, topography, and satellite imagery, to identify patterns and trends associated with flooding. As most of these methods relied on subset of parameters or focused on considering individual datasets such as satellite, they are limited in terms of precision as the holistic parameterization was not done in the past.

However, none of existing models collectively considered comprehensive parameters such as spatially distributed land subsidence, spatially distributed surface topography, spatially distributed predicted rainfall and temperature, impact of Moon Gravitational Pull (MGP) on Earth, Farm Sustainability Index (generated by combining multiple indexes).

SUMMARY

Embodiments of the present disclosure present technological improvements as solutions to one or more of the above-mentioned technical problems recognized by the inventors in conventional systems. For example, in one embodiment, a method for forecasting floods at farm-level using remote sensing and an auxiliary data integration is provided. The processor-implemented method includes receiving, via an input/output (I/O) interface, an input data comprises of a remote sensing data, a forecasted whether data, a soil health data, a time-series ground water depth (GWD) data, satellite data, seismic records, and historical flood related data of a region of interest.

Further, the processor-implemented method includes pre-processing the received input data to obtain a continuous map of ground deformation and one or more subsidence signals from terrain-induced phase changes by applying one or more topographic corrections through a Digital Elevation Model (DEM), estimating a spatially distributed land subsidence based on the received remote sensing data using a Short Baseline Subsets (SBAS) Interferometric Synthetic Aperture Radar (InSAR) technique and extracting a spatially distributed surface topography from the remote sensing data using the SBAS InSAR technique.

Furthermore, the processor-implemented method includes identifying spatially distributed forecasted rainfall and temperature for the region of interest based on the forecasted whether data, calculating moon gravitational pull on earth based on Newton's law of universal gravitation and determining a Farm Sustainability Index (FSI) based on the received remote sensing data, the soil health data, the time-series Ground Water Depth (GWD) data, the satellite data, the seismic records, and the historical flood related data using a pre-trained machine-learning model. Further, the processor-implemented method includes generating a Land Use Land Cover (LULC) map based on the received remote sensing and the satellite data and one or more spatially distributed maps using the pre-trained machine learning model with weighted parameterization. The one or more spatially distributed maps include a spatially distributed georeferenced flood inundation map and a spatially distributed georeferenced flood probability map.

In another embodiment, a system for forecasting floods at farm-level using remote sensing and an auxiliary data integration is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive, via an Input/Output (I/O) interface, an input data comprises of a remote sensing data, a forecasted whether data, a soil health data, a time-series ground water depth (GWD) data, satellite data, seismic records, and historical flood related data of a region of interest.

The one or more hardware processors are configured by the instructions to pre-process the received input data to obtain a continuous map of ground deformation and one or more subsidence signals from terrain-induced phase changes by applying one or more topographic corrections through a Digital Elevation Model (DEM), estimate a spatially distributed land subsidence based on the received remote sensing data using an Interferometric Synthetic Aperture Radar technique (InSAR) and extract a spatially distributed surface topography from the remote sensing data using a Short Baseline Subsets (SBAS) InSAR technique.

Further, the one or more hardware processors are configured by the instructions to identify spatially distributed forecasted rainfall and temperature for the region of interest based on the forecasted whether data, calculate moon gravitational pull on earth based on Newton's law of universal gravitation, and determine a Farm Sustainability Index (FSI) based on the received remote sensing data, the soil health data, the time-series Ground Water Depth (GWD) data, the satellite data, the seismic records, and the historical flood related data using a pre-trained machine-learning model. Further, the one or more hardware processors are configured by the instructions to generate a Land Use Land Cover (LULC) map based on the received remote sensing and the satellite data and one or more spatially distributed maps using the pre-trained machine learning model with weighted parameterization. The one or more spatially distributed maps include a spatially distributed georeferenced flood inundation map and a spatially distributed georeferenced flood probability map.

In yet another aspect, there are provided one or more non-transitory machine-readable information storage mediums comprising one or more instructions, which when executed by one or more hardware processors causes a method for forecasting floods at farm-level using remote sensing and an auxiliary data integration is provided. The processor-implemented method includes receiving, via an input/output (I/O) interface, an input data comprises of a remote sensing data, a forecasted whether data, a soil health data, a time-series ground water depth (GWD) data, satellite data, seismic records, and historical flood related data of a region of interest.

Further, the processor-implemented method includes pre-processing the received input data to obtain a continuous map of ground deformation and one or more subsidence signals from terrain-induced phase changes by applying one or more topographic corrections through a Digital Elevation Model (DEM), estimating a spatially distributed land subsidence based on the received remote sensing data using a Short Baseline Subsets (SBAS) Interferometric Synthetic Aperture Radar (InSAR) technique and extracting a spatially distributed surface topography from the remote sensing data using the SBAS InSAR technique.

Furthermore, the processor-implemented method includes identifying spatially distributed forecasted rainfall and temperature for the region of interest based on the forecasted whether data, calculating moon gravitational pull on earth based on Newton's law of universal gravitation and determining a Farm Sustainability Index (FSI) based on the received remote sensing data, the soil health data, the time-series Ground Water Depth (GWD) data, the satellite data, the seismic records, and the historical flood related data using a pre-trained machine-learning model. Further, the processor-implemented method includes generating a Land Use Land Cover (LULC) map based on the received remote sensing and the satellite data and one or more spatially distributed maps using the pre-trained machine learning model with weighted parameterization. The one or more spatially distributed maps include a spatially distributed georeferenced flood inundation map and a spatially distributed georeferenced flood probability map.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for forecasting floods at farm-level using remote sensing and an auxiliary data integration, according to some embodiments of the present disclosure.

FIG. 2A and 2B (collectively referred as FIG. 2) is a functional block diagram illustrating the system of FIG. 1 for forecasting floods at farm-level using remote sensing and an auxiliary data integration, according to some embodiments of the present disclosure.

FIG. 3A and 3B (collectively referred as FIG. 3) is an exemplary flow diagram illustrating a processor-implemented method for forecasting floods at farm-level using remote sensing and an auxiliary data integration, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Floods prediction holds greater importance than post-flood analysis because it allows for proactive measures to minimize damage in the agriculture region. Anticipating floods enables farmers to safeguard crops, livestock, and equipment, reducing potential losses. Early warnings can help in adjusting planting schedules and implementing soil protection strategies, ensuring better resilience against flood impacts. Additionally, forecasting facilitates timely evacuation and relocation efforts, protecting both human and animal lives. While post-flood analysis provides valuable insights for future planning, the ability to anticipate and prepare for floods directly mitigates immediate threats and ensures the continuity of agricultural activities. Thus, flood forecasting is crucial for sustaining agricultural productivity and minimizing economic disruptions.

Existing models leverage various types of data, such as historical weather patterns, rainfall intensity, river flow rates, soil moisture levels, topography, and satellite imagery, to identify patterns and trends associated with flooding. As most of the existing methods relied on subset of parameters or focused on considering individual datasets such as satellite, they are limited in terms of precision as the holistic parameterization was not done in the past. However, none of the existing models collectively considered comprehensive parameters such as spatially distributed land subsidence, spatially distributed surface topography, spatially distributed predicted rainfall and temperature, impact of MGP on Earth, Farm Sustainability Index (generated by combining multiple indexes). The flood intensity can be influenced by each of these parameters separately, and it is crucial to comprehend their collective impact on flood forecasting. Consideration of these parameters will help in precise prediction of flood. Importantly, assigning weights to parameters in a flood forecasting model is a critical step to ensure the model accurately reflects the importance of different factors influencing flood events.

Therefore, a model is required where comprehensive parameterization needs to be considered. In addition, adopting Generative AI enhances flood forecasting by integrating diverse data sources, recognizing complex patterns, developing advanced predictive models, assessing climate change impacts, and providing real-time monitoring and dynamic updates. It supports comprehensive risk assessment, informed decision-making, and effective public communication, ultimately improving preparedness and resilience against floods.

The invention disclosed herein is a system for forecasting floods at farm-level using remote and proximal sensing and auxiliary data integration. In particular, a system and a method are proposed for medium-range flood forecasting in the agriculture region based on- (a) spatially distributed land subsidence information, (b) spatially distributed surface topography. Both (a) and (b) can be derived from archived Earth observation data combined with other parameters such as (c) downscaled spatially distributed forecasted rainfall and temperature records, (d) MGP on Earth, multi-parameter based derived Farm Sustainability Index and (e) land use land cover (LULC). The proposed system and method also generate a big geospatial database (BGD) of forecasted spatially distributed flood Inundation map and spatially distributed flood probability map of a given region.

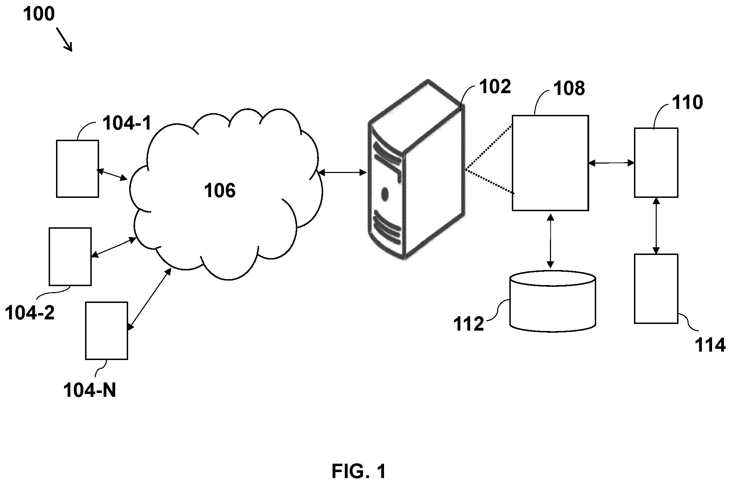

Referring now to the drawings, and more particularly to FIG. 1 through FIG. 3B, where similar reference characters denote corresponding features consistently throughout the figures, there are shown preferred embodiments, and these embodiments are described in the context of the following exemplary system and/or method.

FIG. 1 illustrates a block diagram of a system 100 for forecasting floods at farm-level using remote sensing and an auxiliary data integration, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108, which are communicatively coupled with the at least one memory to execute a plurality of modules 114 therein. The components and functionalities of the system 100 are described further in detail.

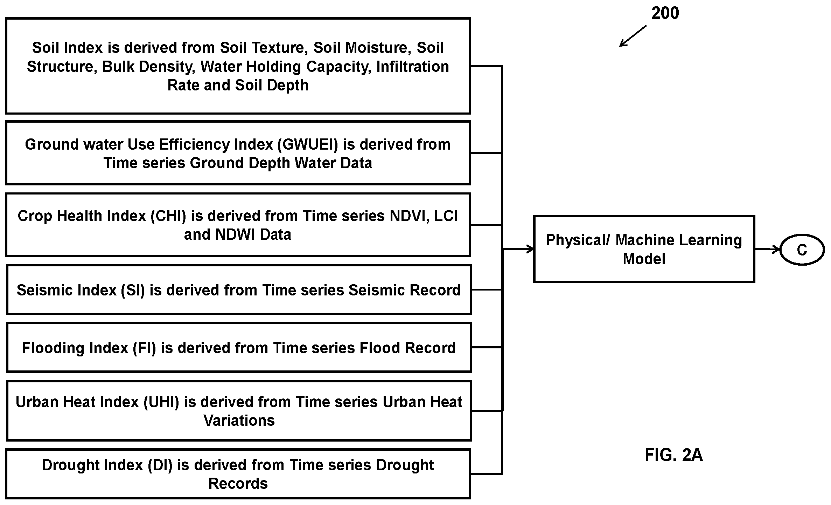

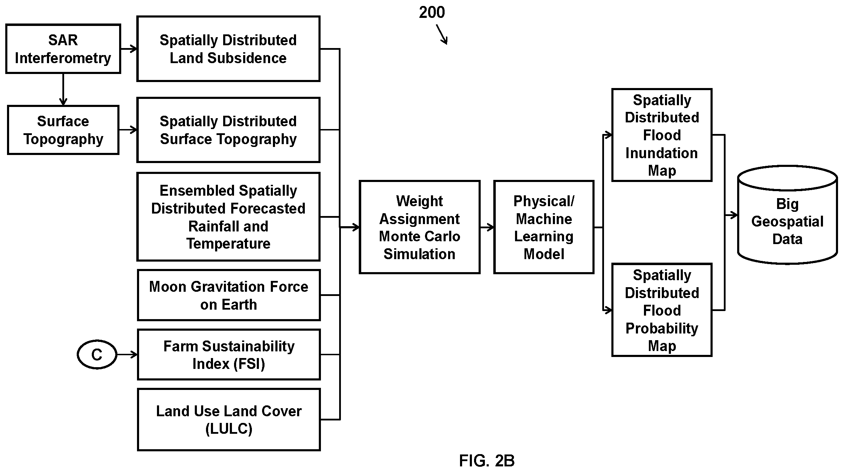

FIG. 2A and 2B (collectively referred as FIG. 2) is a functional block diagram 200 to illustrate the system 100 for forecasting floods at farm-level using remote sensing and an auxiliary data integration, according to some embodiments of the present disclosure. In one embodiment, the system 100 is configured for a medium-range flood forecasting in an agriculture region based on (a) spatially distributed land subsidence information, (b) spatially distributed surface topography. Both spatially distributed land subsidence information and spatially distributed surface topography are derived from an archived Earth observation data combined with other parameters such as (c) downscaled spatially distributed forecasted rainfall and temperature records, (d) MGP on Earth, multi-parameter based derived Farm Sustainability Index and (e) land use land cover (LULC). Herein, the Farm Sustainability Index is derived based on multiple variables, which can be obtained from either remote sensing or sensor or combination of both. Those variables are soil index, Ground water use efficiency index, Crop Health Index, Seismic Index, Flooding Index, Urban Heat Index, Drought Index. Additionally, land subsidence, where the ground sinks due to natural or human activities, can exacerbate flood risks by lowering the land's elevation and creating depressions that collect water.

In another embodiment, the system 100 also generates a big geospatial database (BGD) of forecasted spatially distributed flood Inundation map and spatially distributed flood probability map of a given region. The flood probability maps may identify areas with a high likelihood of flooding. The flood probability maps may help authorities to develop emergency response systems. Also, insurance companies use flood probability maps to assess risk and set premiums for flood insurance. In addition, the flood probability maps may support the conservation of natural floodplains, wetlands and other ecosystems. Furthermore, flood probability maps help in preparing climate change adaptation plans.

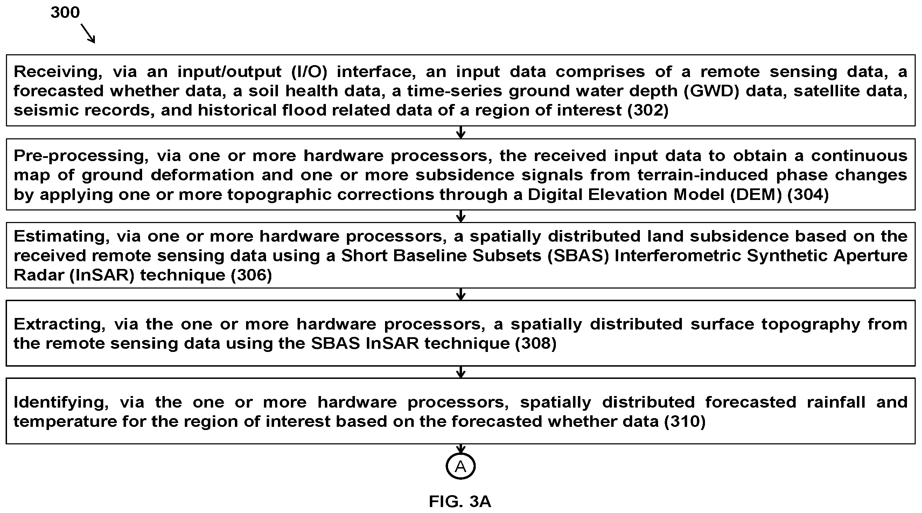

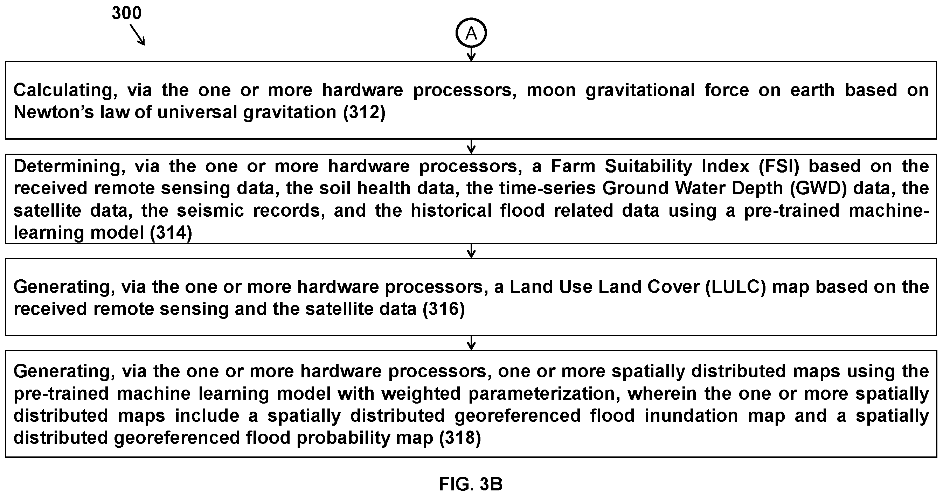

FIG. 3A and 3B (collectively referred as FIG. 3) is a flow diagram illustrating a processor-implemented method 300 for forecasting floods at farm-level using remote sensing and an auxiliary data integration implemented by the system 100 of FIG. 1, in accordance with an embodiment of the present disclosure. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to receive an input data comprises of a remote sensing data, a forecasted whether data, a soil health data, a time-series ground water depth (GWD) data, satellite data, seismic records, and historical flood related data of a region of interest.

At the next step 304 of the processor-implemented method 300, the one or more hardware processors 108 are configured by the programmed instructions to pre-process the received input data to obtain a continuous map of ground deformation and one or more subsidence signals from terrain-induced phase changes by applying one or more topographic corrections through a Digital Elevation Model (DEM). The Digital Elevation Model (DEM) is a digital representation of the Earth's surface elevation at each point within a radar footprint.

At the next step 306 of the processor-implemented method 300, the one or more hardware processors 108 are configured by the programmed instructions to estimate a spatially distributed land subsidence based on the received remote sensing data using an Interferometric Synthetic Aperture Radar technique (InSAR). The spatially distributed land subsidence comprises temporal trends, seasonal variations, and sudden subsidence events occurring in land present in the region of interest. Generating information about land subsidence using the InSAR involves several key steps to analyze radar data acquired from satellites. The InSAR is a remote sensing technique that measures ground deformation with millimeter-level precision over large areas.

In an exemplary embodiment, synthetic-aperture radar (SAR) satellites, such as Sentinel-1 from the European Space Agency (ESA), acquire radar images of the Earth's surface in both ascending and descending orbits. These images are taken at different times, capturing the same area from slightly different perspectives. Next, the acquired SAR images undergo a series of preprocessing steps. This includes co-registration, where images are aligned to correct for geometric distortions caused by satellite orbits and Earth's curvature. After co-registration, interferograms are generated by calculating the phase difference between the two SAR images. The phase difference, known as interferometric phase, corresponds to the change in distance between the satellite and the ground surface due to deformation, such as land subsidence. To extract meaningful information from interferograms, phase unwrapping is performed to remove phase ambiguities and create a continuous map of ground deformation. Additionally, topographic corrections are applied using Digital Elevation Models (DEMs) to separate subsidence signals from terrain-induced phase changes. Subsidence analysis involves interpreting the unwrapped phase data to quantify subsidence rates (velocity) over time. Time series analysis of interferometric measurements reveals temporal trends, seasonal variations, and sudden subsidence events. This data is crucial for understanding the magnitude and spatial distribution of subsidence phenomena.

At the next step 308 of the processor-implemented method 300, the one or more hardware processors 108 are configured by the programmed instructions to extract a spatially distributed surface topography from the remote sensing data using a Short Baseline Subsets (SBAS) InSAR technique. Herein, by measuring the phase difference between radar signals acquired from slightly different positions (during two different satellite passes), InSAR can detect ground surface movements with high accuracy. To generate a DEM using InSAR, multiple SAR images (at least two) of the same area are acquired over time. Each image pair contains phase information that corresponds to the elevation differences between the ground and the satellite during each acquisition. The process begins with co-registering the SAR images to ensure they are accurately aligned spatially. This step corrects for any geometric distortions caused by differences in satellite positions and viewing angles.

Once co-registered, the SAR images are processed to create interferograms. Interferograms are formed by calculating the phase difference (interferometric phase) between corresponding pixels in the SAR images. The interferometric phase contains information about the range change (distance) between the satellite and the ground surface over time. This change in range is caused by surface deformation, which includes elevation changes due to topography. Phase unwrapping is then performed to convert the wrapped phase values into a continuous map of phase differences. This step is critical because the phase values are cyclic and need to be unwrapped to obtain accurate elevation measurements. Finally, the unwrapped phase data is converted into elevation values using the radar wavelength and other geometric parameters. This process generates a Digital Elevation Model (DEM), which is a digital representation of the Earth's surface elevation at each point within the radar footprint.

At the next step 310 of the processor-implemented method 300, the one or more hardware processors 108 are configured by the programmed instructions to identify spatially distributed forecasted rainfall and temperature for the region of interest based on the forecasted whether data from a predefined Global Forecast System (GFS). The GFS operates on a global grid with horizontal resolutions typically ranging from about 13 kilometers to 50 kilometers. The GFS provides forecasts for up to 16 days into the future, with updates typically issued four times daily.

At the next step 312 of the processor-implemented method 300, the one or more hardware processors 108 are configured by the programmed instructions to calculate moon gravitational pull-on earth based on Newton's law of universal gravitation. The formula for gravitational pull is given in equation (1) -

$$F = \frac{Gm_1.m_2}{r^2} \tag{1}$$

wherein, $F$ is the gravitational force, G is the universal gravitational constant $6.67430 \times 10^{-11}$ m$^3$kg$^{-1}$s$^{-2}$; $m_1$, and $m_2$ are the masses of the two objects (in this case, the mass of the Moon $m_1$ and the mass of the Earth $m_2$; $r$ is the distance between the centers of Moon and Earth. It is important to note that r varies on daily basis, hence, altering the force exerted by moon on earth and can impact the water movement over the large region.

At the next step 314 of the processor-implemented method 300, the one or more hardware processors 108 are configured by the programmed instructions to determine a Farm Sustainability Index (FSI) based on the received remote sensing data, the soil health data, the time-series Ground Water Depth (GWD) data, the satellite data, the seismic records, and the historical flood related data using a pre-trained machine-learning model. The estimation of Farm Sustainability Index (FSI) at various time instances is computed using empirical or semi-empirical relationship given in equation (2):

$$\text{FSI} = \beta_0 + \beta_1 * X_1 + \beta_2 * X_2 + \beta_3 * X_3 + \beta_4 * X_4 + \beta_5 * X_5 + \beta_6 * X_6 + \beta_7 * X_7 \tag{2}$$

wherein, $0 \leq FSI \leq 1$. 0 represents farm is in very bad condition whereas 1 represents farm is in excellent condition.
$\beta_0$ = intercept;
$\beta_1, \beta_2, \beta_3, \beta_4, \beta_5, \beta_6, \beta_7$ = regression coefficients;
$X_1$ = Soil Index (SI);
$X_2$ = Ground Water Use Efficiency Index (GWUEI)

$X_3$ = Crop Health Index (CHI)
$X_4$ = Seismic Index (SeI)
$X_5$ = Flooding Index (FI)
$X_6$ = Urban Heat Index (UHI)
$X_7$ = Drought Index (DI)

In one example, suppose $\beta_0 = 0.2$, $\beta_1 = 0.1$, $\beta_2 = 0.15$, $\beta_3 = 0.05$, $\beta_4 = 0.1$, $\beta_5 = 0.1$, $\beta_6 = 0.15$, $\beta_7 = 0.15$ and $X_1 = 0.8$, $X_2 = 0.7$, $X_3 = 0.9$, $X_4 = 0.6$, $X_5 = 0.5$, $X_6 = 0.7$, $X_7 = 0.6$. the FSI value will 0.73 using equation (2), indicates a relatively high level of farm sustainability.

The Soil Index (SI) is derived based on the pre-trained machine learning model which utilizes soil related parameters comprising soil texture (ST), soil moisture (SM), soil structure (SS), bulk density (BD), soil water holding capacity (WHC), infiltration rate (IR) and soil depth (SD). The estimation of Soil Index (SI) at various time instances is computed using empirical or semi-empirical relationship given in equation (3). It is important to note that regression coefficients of equation (3) may vary as per soil texture and structure.

$$SI = \beta_0 + \beta_1 * Y_1 + \beta_2 * Y_2 + \beta_3 * Y_3 + \beta_4 * Y_4 + \beta_5 * Y_5 \qquad (3)$$

wherein:

$\beta_0$ = intercept;
$\beta_1$, $\beta_2$, $\beta_3$, ($\beta_4$, $\beta_5$ are regression coefficients;
$Y_1$ = Soil moisture (SoM) (Unit: meter$^3$/meter$^3$);
$Y_2$ = Bulk density (BD) of soil (Unit: gram/centimeter$^3$);
$Y_3$ = Water holding capacity of soil (WHC) (Unit: centimeter of water per foot of soil);
$Y_4$ = Infiltration rate (IR) of soil (Unit: centimeter per hour);
$Y_5$ = Soil depth (SD) (Unit: centimeter).

The ground water use efficiency index (GWUEI) is derived using a predefined empirical model which utilizes the time-series ground water depth (GWD) data collected from central ground water board (CGWB) online portal as given in equation (4).

$$GWUEI = \frac{GWt(n) - min\left(GW\left(t(0)...t(n)\right)\right)}{max\left(GW\left(t(0)...t(n)\right) - min\left(GW\left(t(0)...t(n)\right)\right)\right)} \qquad (4)$$

wherein:

$GWt(n)$ is ground water depth (in m) at time $t(n)$;
$min(GW(t(0)...t(n)))$ is minimum ground water depth between time $t(0)$ and $t(n)$;
$max(GW(t(0)...t(n)))$ is maximum ground water depth between time $t(0)$ and $t(n)$.

Further, the crop health index (CHI) is derived (using equations (5), (6), (7) and (8)) based on the pre-trained machine learning model which utilizes time-series indices such as Normalized Difference Water Index (NDWI), Normalized Difference Vegetation Index (NDVI) and Leaf Chlorophyll Index (LCI) derived from optical satellite data.

$$CHI = \frac{\left(NDVI' * W1 + NDWI' * W2 + LCI' * W3\right)}{W1 + W2 + W3} \qquad (5)$$

wherein NDVI, NDWI, and LCI are the normalized difference vegetation index (NDVI), normalized difference water index (NDWI), and normalized Leaf Chlorophyll Index (LCI), respectively. W1, W2 and W3 are the weights assigned to each index. NDVI, NDWI, and LCI are calculated using equations (6), (7) and (8), respectively.

$$NDVI = \frac{NDVIt(n) - min\left(NDVI\left(t(0)...t(n)\right)\right)}{max\left(NDVI\left(t(0)...t(n)\right) - min\left(NDVI\left(t(0)...t(n)\right)\right)\right)} \qquad (6)$$

wherein, $NDVIt(n)$ is NDVI at time $t(n)$

$min\ (NDVI(t(0)...t(n)))$*is minimum NDVI between time t(0) and t(n)*
$max\ (NDVI(t(0)...t(n)))$*is maximum NDVI between time t(0) and t(n)*

$$NDWI = \frac{NDWIt(n) - min\left(NDWI\left(t(0)...t(n)\right)\right)}{max\left(NDWI\left(t(0)...t(n)\right) - min\left(NDWI\left(t(0)...t(n)\right)\right)\right)} \tag{7}$$

wherein

$NDWI\ t(n)$ is NDWI at time *t(n)*
$min\ (NDWI(t(0)...t(n)))$*is minimum NDWI between time t(0) and t(n)*
$max\ (NDWI(t(0)...t(n)))$*is maximum NDWI between time t(0) and t(n)*

$$LCI = \frac{LCIt(n) - min\left(LCI\left(t(0)...t(n)\right)\right)}{max\left(LCI\left(t(0)...t(n)\right) - min\left(LCI\left(t(0)...t(n)\right)\right)\right)} \tag{8}$$

wherein, $LCIt(n)$is LCI at time *t(n)*
$min\ (LCI(t(0)...t(n)))$*is minimum LCI between time t(0) and t(n)*
$max\ (LCI(t(0)...t(n)))$*is maximum LCI between time t(0) and t(n)*

The Flooding Index (FI) is derived based on the pre-trained machine learning model which utilizes past-flood records derived from the time-series satellite dataset as given below in equation (9).

$$FI = \frac{FAt(n) - min\left(FA\left(t(0)...t(n)\right)\right)}{max\left(FA\left(t(0)...t(n)\right) - min\left(FA\left(t(0)...t(n)\right)\right)\right)} \tag{9}$$

wherein, $FAt(n)$is flooded area (in m$^2$) at time t(n)
$min\ (FA(t(0)...t(n)))$*is minimum flooded area (in m$^2$) between time t(0) and t(n)*
$max\ (FA(t(0)...t(n)))$*is maximum flooded area (in m$^2$) between time t(0) and t(n)*

The Seismic Index (SeI) is derived based on the pre-trained machine learning model which utilizes past- seismic reports collected from the seismology center as given below in equation (10).

$$SeI = \frac{SMt(n) - min\left(SM\left(t(0)...t(n)\right)\right)}{max\left(SM\left(t(0)...t(n)\right) - min\left(SM\left(t(0)...t(n)\right)\right)\right)} \tag{10}$$

wherein, $SMt(n)$ is seismic measure (in Richter scale) at time t(*n*);
$min\ (SM(t(0)... t(n)))$*is minimum seismic measure (in Richter scale) between time t(0) and t(n);*
$max(SM(t(0)...t(n)))$*is maximum seismic measure (in Richter scale) between time t(0) and t(n).*

The Urban Heat Index (UHI) is derived based on the pre-trained machine learning model which utilizes Land Surface Temperature (LST) of urban and rural regions which can be derived using optical satellite data as given below in equation (11).

$$UHI = \frac{LSTt(n) - min\left(LST\left(t(0)...t(n)\right)\right)}{max\left(LST\left(t(0)...t(n)\right) - min\left(LST\left(t(0)...t(n)\right)\right)\right)} \tag{11}$$

wherein, $LSTt(n)$is land surface temperature (in °C) at time t(n);
$min(LST(t(0)...t(n)))$*is minimum land surface temperature (in °C) between time t(0) and t(n);*
$max\ (LST(t(0)...t(n)))$*is maximum land surface temperature (in °C) between time t(0) and t(n).*

The Drought Index (DI) is derived based on the drought area which is derived based on pre-trained machine learning model which utilizes NDVI and NDWI indexes derived using time-series optical satellite data as given below in equation (12).

$$DI = \frac{DAt(n) - min\big(DA\big(t(0)...t(n)\big)\big)}{max\big(DA\big(t(0)...t(n)\big) - min\big(DA\big(t(0)...t(n)\big)\big)\big)} \qquad (12)$$

wherein, *DAt(n)* is drought area (in m$^2$) at time t(n)
*min* (*DA*(*t*(0)...*t*(*n*))) is minimum drought area (in m$^2$) between time *t(0) and t(n)*
*max* (*DA*(*t*(0)...*t*(*n*))) is maximum drought area (in m$^2$) between time *t(0) and t(n)*

At the next step 316 of the processor-implemented method 300, the one or more hardware processors 108 are configured by the programmed instructions to generate a Land Use Land Cover (LULC) map based on the received remote sensing and the satellite data.

Finally, at the last step 318 of the processor-implemented method 300, the one or more hardware processors 108 are configured by the programmed instructions to generate one or more spatially distributed maps using the pre-trained machine learning model with weighted parameterization. The one or more spatially distributed maps include a spatially distributed georeferenced flood inundation map and a spatially distributed georeferenced flood probability map. The spatially distributed georeferenced flood inundation map along with spatially distributed georeferenced flood probability map would be generated after model implementation. Since the model may be applied over the larger region, a big geospatial database (e.g. 100 TB) will be generated, where image data may be converted and stored in vector format using embedding.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of precise prediction of flood. Existing models leverage various types of data, such as historical weather patterns, rainfall intensity, river flow rates, soil moisture levels, topography, and satellite imagery, to identify patterns and trends associated with flooding. As most of the existing methods relied on subset of parameters or focused on considering individual datasets such as satellite, they are limited in terms of precision as the holistic parameterization was not done in the past. However, none of the existing models collectively considered comprehensive parameters such as spatially distributed land subsidence, spatially distributed surface topography, spatially distributed predicted rainfall and temperature, impact of MGP on Earth, Farm Sustainability Index (generated by combining multiple indexes).

The invention disclosed is a system for forecasting floods at farm-level using remote and proximal sensing and auxiliary data integration. **In** particular, a system and a method are disclosed for medium-range flood forecasting in the agriculture region based on spatially distributed land subsidence information, spatially distributed surface topography. The system and method disclosed also generate a big geospatial database (BGD) of forecasted spatially distributed flood Inundation map and spatially distributed flood probability map of a given region.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) comprising:

   receiving (302), via an input/output (I/O) interface, an input data comprises of a remote sensing data, a forecasted weather data, a soil health data, a time-series ground water depth (GWD) data, satellite data, seismic records, and historical flood related data of a region of interest;
   pre-processing (304), via one or more hardware processors, the received input data to obtain a continuous map of ground deformation and one or more subsidence signals from terrain-induced phase changes by applying one or more topographic corrections through a Digital Elevation Model (DEM),;
   estimating (306), via one or more hardware processors, a spatially distributed land subsidence based on the received remote sensing data using a Short Baseline Subsets (SBAS) Interferometric Synthetic Aperture Radar (InSAR) technique, wherein the spatially distributed land subsidence comprises temporal trends, seasonal variations, and sudden subsidence events occurring in land within the region of interest;
   extracting (308), via the one or more hardware processors, a spatially distributed surface topography from the remote sensing data using the SBAS-InSAR technique;
   identifying (310), via the one or more hardware processors, spatially distributed forecasted rainfall and temperature for the region of interest based on the forecasted weather data;
   calculating (312), via the one or more hardware processors, moon gravitational pull-on earth based on Newton's law of universal gravitation;
   determining (314), via the one or more hardware processors, a Farm Sustainability Index (FSI) based on the received remote sensing data, the soil health data, the time-series ground water depth (GWD) data, the satellite data, the seismic records, and the historical flood related data using a pre-trained machine-learning model;
   generating (316), via the one or more hardware processors, a land use land cover (LULC) map based on the received remote sensing and the satellite data; and
   generating (318), via the one or more hardware processors, one or more spatially distributed maps using the pre-trained machine learning model with weighted parameterization, wherein the one or more spatially distributed maps include a spatially distributed georeferenced flood inundation map and a spatially distributed georeferenced flood probability map.

2. The processor-implemented method (300) as claimed in claim 1, wherein the Farm Sustainability Index (FSI) is derived based on multiple indexes comprising of a soil index (SI), a ground water use efficiency index (GWUEI), a crop health index (CHI), a seismic index (SeI), a flooding index (FI), an urban heat index (UHI), and a drought index (DI).

3. The processor-implemented method (300) as claimed in claim 1, wherein the soil index (SI) is derived based on the pre-trained machine learning model by utilizing soil related parameters comprising soil texture, soil moisture, soil structure, bulk density, soil water holding capacity, infiltration rate and soil depth.

4. The processor-implemented method (300) as claimed in claim 1, wherein the ground water use efficiency index (GWUEI) is derived using a predefined empirical model by utilizing the time-series ground water depth (GWD) data collected from central ground water board (CGWB) online portal.

5. The processor-implemented method (300) as claimed in claim 1, wherein the crop health index (CHI) derived based on the pre-trained machine learning model by utilizing time-series indices such as normalized difference water index (NDWI), normalized difference vegetation index (NDVI) and leaf chlorophyll index (LCI) derived from optical satellite data.

6. The processor-implemented method (300) as claimed in claim 1, wherein the Flooding Index (FI) derived based on the pre-trained machine learning model by utilizing past-flood records derived from the time-series satellite dataset.

7. The processor-implemented method (300) as claimed in claim 1, wherein the Seismic Index (SeI) is derived based on the pre-trained machine learning model by utilizing past-seismic reports collected from the seismology center.

8. The processor-implemented method (300) as claimed in claim 1, wherein the Urban Heat Index (UHI) is derived based on the pre-trained machine learning model by utilizing land surface temperature (LST) of urban and rural region which can be derived using optical satellite data.

9. The processor-implemented method (300) as claimed in claim 1, wherein the Drought Index (DI) is derived based on the pre-trained machine learning model by utilizing NDVI, NDWI, and LCI indexes derived using time-series optical satellite data.

10. The processor-implemented method (300) as claimed in claim 1, wherein a geospatial database is created based on the forecasted spatially distributed georeferenced flood inundation map and the spatially distributed georeferenced flood probability map.

11. A system (100) comprising:

   a memory (112) storing instructions;
   one or more Input/Output (I/O) interfaces (104); and
   one or more hardware processors (108) coupled to the memory (112) via the one or more I/O interfaces (104), wherein the one or more hardware processors (108) are configured by the instructions to:

      receive an input data comprises of a remote sensing data, a forecasted whether data, a soil health data, a time-series ground water depth (GWD) data, satellite data, seismic records, and historical flood related data of a region of interest;
      pre-process the received input data to obtain a continuous map of ground deformation and one or more subsidence signals from terrain-induced phase changes by applying one or more topographic corrections through a Digital Elevation Model (DEM),;
      estimate a spatially distributed land subsidence based on the received remote sensing data using an Interferometric Synthetic Aperture Radar technique (InSAR), wherein the spatially distributed land subsidence comprises temporal trends, seasonal variations, and sudden subsidence events occurring in land present in the region of interest;
      extract a spatially distributed surface topography from the remote sensing data using a Short Baseline Subsets (SBAS) InSAR technique;
      identify spatially distributed forecasted rainfall and temperature for the region of interest based on the forecasted whether data;
      calculate moon gravitational pull-on earth based on Newton's law of universal gravitation;
      determine a Farm Sustainability Index (FSI) based on the received remote sensing data, the soil health data, the time-series Ground Water Depth (GWD) data, the satellite data, the seismic records, and the historical flood related data using a pre-trained machine-learning model;
      generate a Land Use Land Cover (LULC) map based on the received remote sensing and the satellite data; and

generate one or more spatially distributed maps using the pre-trained machine learning model with weighted parameterization, wherein the one or more spatially distributed maps include a forecasted spatially distributed georeferenced flood inundation map and a spatially distributed georeferenced flood probability map.

12. The system (100) as claimed in claim 11, wherein the Farm Sustainability Index (FSI) is derived based on multiple indexes comprising of a soil index (SI), a ground water use efficiency index (GWUEI), a crop health index (CHI), a seismic index (SeI), a flooding index (FI), an urban heat index (UHI), and a drought index (DI).

13. The system (100) as claimed in claim 11, wherein a geospatial database is created based on the spatially distributed georeferenced flood inundation map and the spatially distributed georeferenced flood probability map.

14. One or more non-transitory machine-readable information storage mediums comprising one or more instructions which when executed by one or more hardware processors cause:

receiving , via an input/output (I/O) interface, an input data comprises of a remote sensing data, a forecasted weather data, a soil health data, a time-series ground water depth (GWD) data, satellite data, seismic records, and historical flood related data of a region of interest;

pre-processing , the received input data to obtain a continuous map of ground deformation and one or more subsidence signals from terrain-induced phase changes by applying one or more topographic corrections through a Digital Elevation Model (DEM),.;

estimating , a spatially distributed land subsidence based on the received remote sensing data using a Short Baseline Subsets (SBAS) Interferometric Synthetic Aperture Radar (InSAR) technique, wherein the spatially distributed land subsidence comprises temporal trends, seasonal variations, and sudden subsidence events occurring in land within the region of interest;

extracting a spatially distributed surface topography from the remote sensing data using the SBAS-InSAR technique;

identifying spatially distributed forecasted rainfall and temperature for the region of interest based on the forecasted weather data;

calculating moon gravitational pull-on earth based on Newton's law of universal gravitation;

determining a Farm Sustainability Index (FSI) based on the received remote sensing data, the soil health data, the time-series ground water depth (GWD) data, the satellite data, the seismic records, and the historical flood related data using a pre-trained machine-learning model;

generating a land use land cover (LULC) map based on the received remote sensing and the satellite data; and generating one or more spatially distributed maps using the pre-trained machine learning model with weighted parameterization, wherein the one or more spatially distributed maps include a spatially distributed georeferenced flood inundation map and a spatially distributed georeferenced flood probability map.

15. The one or more non-transitory machine-readable information storage mediums of claim 14,

wherein the Farm Sustainability Index (FSI) is derived based on multiple indexes further comprising of a soil index (SI), a ground water use efficiency index (GWUEI), a crop health index (CHI), a seismic index (SeI), a flooding index (FI), an urban heat index (UHI), and a drought index (DI);

wherein the soil index (SI) is derived based on the pre-trained machine learning model by utilizing soil related parameters further comprising soil texture, soil moisture, soil structure, bulk density, soil water holding capacity, infiltration rate and soil depth;

wherein the ground water use efficiency index (GWUEI) is derived using a predefined empirical model by utilizing the time-series ground water depth (GWD) data collected from central ground water board (CGWB) online portal;

wherein the crop health index (CHI) derived based on the pre-trained machine learning model by utilizing time-series indices such as normalized difference water index (NDWI), normalized difference vegetation index (NDVI) and leaf chlorophyll index (LCI) derived from optical satellite data;

wherein the Flooding Index (FI) derived based on the pre-trained machine learning model by utilizing past-flood records derived from the time-series satellite dataset;

wherein the Seismic Index (SeI) is derived based on the pre-trained machine learning model by utilizing past-seismic reports collected from the seismology center;

wherein the Urban Heat Index (UHI) is derived based on the pre-trained machine learning model by utilizing land surface temperature (LST) of urban and rural region which can be derived using optical satellite data; wherein the Drought Index (DI) is derived based on the pre-trained machine learning model by utilizing NDVI, NDWI, and LCI indexes derived using time-series optical satellite data; and

wherein a geospatial database is created based on the forecasted spatially distributed georeferenced flood inundation map and the spatially distributed georeferenced flood probability map.

FIG. 1

**200**

Soil Index is derived from Soil Texture, Soil Moisture, Soil Structure, Bulk Density, Water Holding Capacity, Infiltration Rate and Soil Depth

Ground water Use Efficiency Index (GWUEI) is derived from Time series Ground Depth Water Data

Crop Health Index (CHI) is derived from Time series NDVI, LCI and NDWI Data

Seismic Index (SI) is derived from Time series Seismic Record

Flooding Index (FI) is derived from Time series Flood Record

Urban Heat Index (UHI) is derived from Time series Urban Heat Variations

Drought Index (DI) is derived from Time series Drought Records

Physical/ Machine Learning Model

C

**FIG. 2A**

FIG. 2B

300

Receiving, via an input/output (I/O) interface, an input data comprises of a remote sensing data, a forecasted whether data, a soil health data, a time-series ground water depth (GWD) data, satellite data, seismic records, and historical flood related data of a region of interest (302)

Pre-processing, via one or more hardware processors, the received input data to obtain a continuous map of ground deformation and one or more subsidence signals from terrain-induced phase changes by applying one or more topographic corrections through a Digital Elevation Model (DEM) (304)

Estimating, via one or more hardware processors, a spatially distributed land subsidence based on the received remote sensing data using a Short Baseline Subsets (SBAS) Interferometric Synthetic Aperture Radar (InSAR) technique (306)

Extracting, via the one or more hardware processors, a spatially distributed surface topography from the remote sensing data using the SBAS InSAR technique (308)

Identifying, via the one or more hardware processors, spatially distributed forecasted rainfall and temperature for the region of interest based on the forecasted whether data (310)

(A)

FIG. 3A

EP 4 726 436 A1

300

(A)

Calculating, via the one or more hardware processors, moon gravitational force on earth based on Newton's law of universal gravitation (312)

Determining, via the one or more hardware processors, a Farm Suitability Index (FSI) based on the received remote sensing data, the soil health data, the time-series Ground Water Depth (GWD) data, the satellite data, the seismic records, and the historical flood related data using a pre-trained machine-learning model (314)

Generating, via the one or more hardware processors, a Land Use Land Cover (LULC) map based on the received remote sensing and the satellite data (316)

Generating, via the one or more hardware processors, one or more spatially distributed maps using the pre-trained machine learning model with weighted parameterization, wherein the one or more spatially distributed maps include a spatially distributed georeferenced flood inundation map and a spatially distributed georeferenced flood probability map (318)

FIG. 3B

EP 4 726 436 A1

| | Europäisches Patentamt European Patent Office Office européen des brevets | **EUROPEAN SEARCH REPORT** | **Application Number** EP 25 18 4385 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOSWAMI SAPTARSI ET AL: "A review on application of data mining techniques to combat natural disasters", AIN SHAMS ENGINEERING JOURNAL, vol. 9, no. 3, 30 September 2018 (2018-09-30), pages 365-378, XP085481603, ISSN: 2090-4479, DOI: 10.1016/J.ASEJ.2016.01.012 * the whole document * ----- | 1-15 | INV. G01S13/90 G01S7/41 G01S13/86 G01W1/00 G06Q50/02 |
| A | PANDIT ANKUR ET AL: "Assessing InSAR Coherence for Quantification of Agriculture Area Affected by Rainfall Events in Gujrat, India", 2021 IEEE INTERNATIONAL GEOSCIENCE AND REMOTE SENSING SYMPOSIUM IGARSS, IEEE, 11 July 2021 (2021-07-11), pages 6761-6764, XP033984592, DOI: 10.1109/IGARSS47720.2021.9553113 [retrieved on 2021-09-29] * the whole document * ----- | 1-15 | |
| A | SHERPA SONAM FUTI ET AL: "Probabilistic Mapping of August 2018 Flood of Kerala, India, Using Space-Borne Synthetic Aperture Radar", IEEE JOURNAL OF SELECTED TOPICS IN APPLIED EARTH OBSERVATIONS AND REMOTE SENSING, IEEE, USA, vol. 13, 17 February 2020 (2020-02-17), pages 896-913, XP011778604, ISSN: 1939-1404, DOI: 10.1109/JSTARS.2020.2970337 [retrieved on 2020-03-16] * the whole document * ----- -/-- | 1-15 | **TECHNICAL FIELDS SEARCHED (IPC)** G01S G06Q G01W |

The present search report has been drawn up for all claims

| Place of search | Date of completion of the search | Examiner |
|---|---|---|
| Munich | 5 November 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 1 of 2

# EUROPEAN SEARCH REPORT

**Application Number**

EP 25 18 4385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABDO HAZEM GHASSAN ET AL: "Multi-criteria analysis and geospatial applications-based mapping flood vulnerable areas: a case study from the eastern Mediterranean", NATURAL HAZARDS, SPRINGER NETHERLANDS, DORDRECHT, vol. 121, no. 1, 10 August 2024 (2024-08-10), pages 1003-1031, XP038042828, ISSN: 0921-030X, DOI: 10.1007/S11069-024-06864-Y [retrieved on 2024-08-10] * the whole document * ----- | 1-15 | |
| A | MEGAN M MILLER ET AL: "Assessment of Future Flood Hazards for Southeastern Texas: Synthesizing Subsidence, Sea-Level Rise, and Storm Surge Scenarios", THE 3RD EAA EUROPEAN CONGRESS ON ACOUSTICS (FORUM ACUSTICUM 2002), JOHN WILEY & SONS, INC, SEVILLA, SPAIN, vol. 48, no. 8, 28 April 2021 (2021-04-28), page n/a, XP071444267, ISSN: 0094-8276, DOI: 10.1029/2021GL092544 * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 5 November 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421076623